# EUROPÄISCHE PATENTSCHRIFT

(11) **EP 0 477 614 B1**
(45) Veröffentlichungstag und Bekanntmachung des Hinweises auf die Patenterteilung: **24.02.1999**
(21) Anmeldenummer: 91114938.3
(22) Anmeldetag: 04.09.1991
(51) Int. Cl.: H04Q 11/04, H04M 11/06

(54) **Digitale Teilnehmerleitungseinheit für den Anschluss von Teilnehmerendgeräten an eine digitale Fernsprechvermittlungsstelle**
Digital line unit for connecting subscriber terminals to a digital switching exchange
Unité de raccordement de lignes numériques pour connecter des terminaux d'abonné à un central de communication

(30) Priorität: 27.09.1990 DE 4030604
(43) Veröffentlichungstag der Anmeldung: 01.04.1992
(73) Patentinhaber: SIEMENS AKTIENGESELLSCHAFT, 80333 München (DE)
(72) Erfinder: Jugel, Alfred, W-8192 Geretsried (DE); Schmidt, Lothar, W-8080 Fürstenfeldbruck (DE)

(56) Entgegenhaltungen:
- SECOND IEE NATIONAL CONFERENCE ON TELECOMMUNICATIONS 2. April 1989, YORK GB Seiten 190 - 195 G.GEIGER ET AL.
- STUDIEDAG DIGITALE TELEKOMMUNIKATIE 18. November 1986, GENT BE Seiten 1 - 16 R.THEEUWS
- NTT REVIEW Bd. 2, Nr. 4, Juli 1990, TOKYO JP Seiten 44 - 51 T.EGAWA

## Beschreibung

Digitale Teilnehmerleitungseinheit für den Anschluß von Teilnehmerendgeräten an eine digitale Fernsprechvermittlungsstelle

Die Erfindung betrifft eine digitale Teilnehmerleitungseinheit für den Anschluß von Teilnehmerendgeräten an eine digitale Fernsprechvermittlungsstelle gemäß dem Oberbegriff des Patentanspruches 1.

Eine solche digitale Teilnehmerleitungseinheit ist demnach Gruppen von Teilnehmerendgeräten eines digitalen systemintegrierenden Nachrichtennetzes (ISDN-Teilnehmerendgeräten) zugeordnet.

Der Einsatz digitaler Teilnehmerleitungseinheiten der obengenannten Art führt zu einer Ersparnis von Leitungskosten, denn anstelle der Verwendung von individuellen Leitungen wird der Nachrichtenverkehr zur Vermittlungsstelle auf eine geringe Anzahl von Zeitmultiplexleitungen konzentriert, was besonders dann ins Gewicht fällt, wenn die digitalen Teilnehmerleitungseinheiten von der Vermittlungsstelle abgesetzt angeordnet sind.

Die Teilnehmeranschlußbaugruppen solcher digitaler Teilnehmerleitungseinheiten sind auf die Art der anzuschließenden Teilnehmerendgeräte zugeschnitten, nämlich darauf, ob es sich um analoge Teilnehmerendgeräte oder um Teilnehmerendgeräte eines digitalen systemintegrierenden Nachrichtennetzes, des sogenannten ISDN-Netzes, also um ISDN-Teilnehmerendgeräte handelt.

Den ISDN-Teilnehmerendgeräten, die einen sogenannten Basisanschluß erfordern, sind für die Übertragung von und zu der Vermittlungsstelle zwei Nutzkanäle mit je 4 kbit/s (B-Kanäle) und ein Signalisierungskanal mit 16 kbit/s (D-Kanal) für die Signalisierung zwischen Teilnehmer und Vermittlung zur Verfügung gestellt.

Die Teilnehmeranschlußbaugruppe für den Anschluß von ISDN-Teilnehmerendgeräten hat die Hauptaufgabe, die ISDN-Basisanschlüsse vermittlungsseitig normgerecht abzuschließen und sowohl die Nutzdaten als auch die Signalisierungsdaten über die dafür vorgesehenen Wege an die Vermittlungsstelle weiterzuleiten. Zu dieser Aufgabe gehört die anschlußindividuelle Durchschaltung der B-Kanalinformationen zu ausgewählten Zeitschlitzen auf vermittlungsstellenseitige PCM-Vielfachleitungen. Im vorausgesetzten Fall erfolgt die sogenannte D-Kanal-Behandlung, die eine Umsetzung der D-Kanal-Signalisierung in das in der Vermittlungsstelle verwendete Format sowie eine Auskopplung von Paketdaten aus dem D-Kanal einschließt, nicht wie bei einem ebenfalls verfolgten Konzept dezentral auf den Teilnehmeranschlußbaugruppen, sondern durch eine zentrale D-Kanal-Behandlungseinrichtung (siehe "Second IEE National Conference On Telecommunications", 2. April 1989, York, GB, Seiten 190 bis 195; Abschnitt 5.4 und Figur 8 ff.; G. Geiger et al). Die Zentralisierung der D-Kanal-Behandlung führt zu einer Aufwandsverringerung und im Hinblick auf die im Vergleich zu Änderungen der B-Kanal-Behandlung häufiger vorkommenden Änderungen bei der D-Kanal-Behandlung wegen der großen Anzahl von Teilnehmeranschlußbaugruppen innerhalb einer digitalen Teilnehmerleitungseinheit insgesamt auch zu einer beträchtlichen Kostenreduzierung. Im Zusammenhang mit Teilnehmerleitungseinheiten, in deren Teilnehmeranschlußbaugruppen die D-Kanal-Behandlung dezentral durchgeführt wird, ist vorgeschlagen worden, mehrere der Teilnehmeranschlußbaugruppen für ISDN-Teilnehmerendgeräte über eine Verteilereinrichtung zusammenzufassen, die die Anschaltung der vermittlungsseitigen Sprachsignalaus- und -eingänge auf einen gemeinsamen mit der Vermittlungsstelle verbindenden Bus bewirkt.

Die Aufgabe der Erfindung besteht darin, ein Konzept für eine digitale Teilnehmerleitungseinheit anzugeben, durch das es möglich ist, ausgehend von den Gegebenheiten bei Teilnehmerleitungseinheiten mit dezentraler D-Kanal-Behandlung zu einer digitalen Teilnehmerleitungseinheit mit zentraler D-Kanal-Behandlung unter möglichst geringen Änderungen an Bestandteilen zu kommen, die funktionsmäßig nicht von der Konzeptänderung betroffen sind.

Diese Aufgabe wird durch die im Kennzeichen des Patentanspruches 1 angegebenen Merkmale gelöst. Durch die Wahl der vorhandenen Verteilereinrichtung als Ort der zentralen D-Kanal-Behandlung und aufgrund der Ausnutzung von beim bisherigen Aufbaukonzept vorhandenen Leitungsverbindungen zu anderem Zweck ist es möglich, die Zentralisierung zu realisieren, ohne daß außer an den direkt betroffenen Teilen, nämlich den Teilnehmeranschlußbaugruppen und der Verteilereinheit größere Änderungen vorzunehmen sind, was insbesondere für die Anschlußgestaltung und die Verdrahtung gilt. Dies ist insofern von besonderer Bedeutung, als in der Praxis die einzelnen Bestandteile der digitalen Teilnehmerleitungseinheit als gesonderte Bausteine geliefert werden.

Eine weitere Ausgestaltung der Erfindung bezieht sich auf eine auch bisher schon vorhandene Gliederung der Teilnehmerleitungseinheit in eine Basiseinheit und in eine Erweiterungseinheit und den Fall, daß die digitale Teilnehmerleitungseinheit Teilnehmeranschlußbaugruppe für sowohl ISDN-Teilnehmer als auch für Analogteilnehmer umfaßt. Dadurch, daß dann Teilnehmeranschlußbaugruppen für Analogteilnehmer nur in der Basiseinheit, dagegen Teilnehmeranschlußbaugruppen für ISDN Teilnehmer nur in der Erweiterungseinheit angeordnet sind und demnach sich die erfindungsgemäße Struktur auf diese Erweiterungseinheit beschränkt, läßt diese sich unter besonders geringem Aufwana an Verdrahtungsänderungen verwirklichen.

Nachstehend wird die Erfindung anhand eines Ausführungsbeispiels unter Bezugnahme auf eine Zeichnung näher erläutert.

In der Zeichnung zeigen:
- FIG 1: ein Übersichtsblockschaltbild, aus dem die Zu- bzw. Einordnung der erfindungsgemäßen digitalen Teilnehmerleitungseinheit zu einer bzw. in eine digitale Zeitmultiplexvermittlungsstelle hervorgeht.
- FIG 2: derjenige Teil einer solchen digitalen Teilnehmerleitungseinheit, den die Erfindung betrifft.

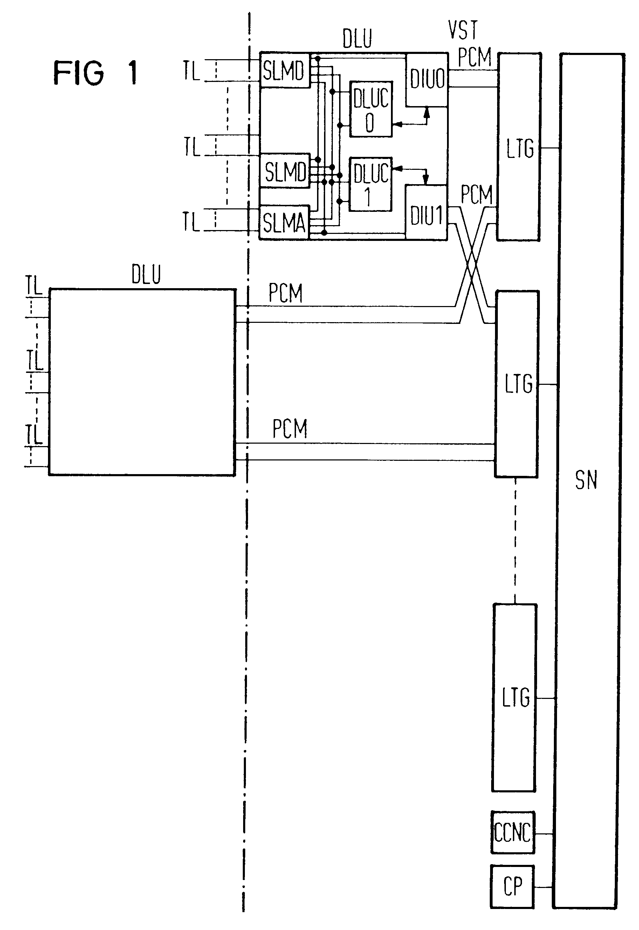

In der FIG 1 sind als wesentliche Bestandteile einer digitalen Zeitmultiplex-Vermittlungsstelle VST ein Koppelnetz SN, ein Koordinationsprozessor CP, eine Steuerung für das Netz der zentralen Zeichengabenkanäle CCNC und Anschlußgruppen LTG gezeigt, die die Schnittstelle zwischen dem digitalen Koppelnetz SN und der digitalen oder analogen Umgebung der Vermittlungsstelle sowie eine digitale Teilnehmerleitungseinheit DLU dargestellt, auf die sich die Erfindung bezieht.

An die digitale Teilnehmerleitungseinheit DLU sind Teilnehmeranschlußleitungen TL angeschlossen, die entweder mit analogen Teilnehmerendgeräten oder mit ISDN-Endgeräten verbinden.

Sofern es sich um analoge Teilnehmerendgeräte handelt, erfolgt der Anschluß an eine Teilnehmeranschlußbaugruppe SLMA innerhalb der digitalen Teilnehmerleitungseinheit DLU, im Falle von ISDN-Endgeräten erfolgt er über Teilnehmeranschlußbaugruppen SLMD der digitalen Teilnehmerleitungseinheit DLU.

Weitere Bestandteile der digitalen Teilnehmerleitungseinheit DLU sind gedoppelte Steuerungen DLUC0 und DLUC1 sowie Schnittstelleneinheiten DIUD0 und DIUD1, die mit den Teilnehmeranschlußbaugruppen über gedoppelte Busleitungen in Verbindung stehen. Von den Schnittstelleneinheiten DIU0 und DIU1 führen gedoppelte PCM-Leitungen PCM zu jeweils zwei der erwähnten Anschlußbaugruppen LTG. Man erkennt also, daß die digitalen Teilnehmerleitungseinheiten DLU, an die eine Vielzahl von Teilnehmeranschlußleitungen bzw. Teilnehmerendgeräte angeschlossen sind, eine Konzentration auf die beiden erwähnten Paare von PCM-Leitungen PCM vornimmt.

Wie die FIG 1 ferner zeigt, können die digitalen Teilnehmerleitungseinheiten DLU auch abgesetzt von der Vermittlungsstelle VST angeordnet sein.

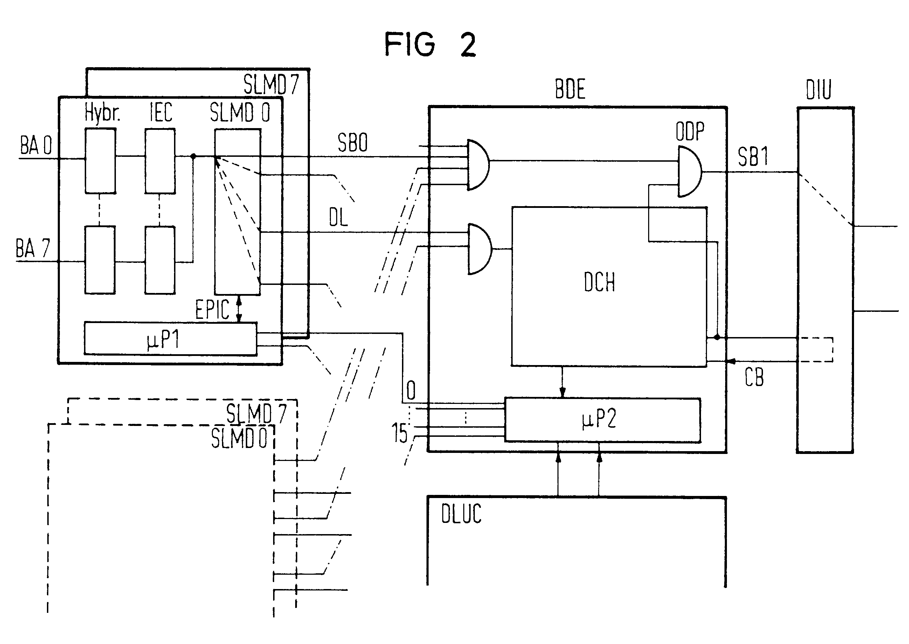

In der FIG 2 sind von der digitalen Teilnehmerleitungseinheit DLU gemäß FIG 1 eine Anzahl von Teilnehmeranschlußbaugruppen SLMD für den Anschluß von ISDN-Teilnehmerendgeräten, eine der Steuerungen DLUC, eine der Schnittstelleneinheiten DIU, sowie eine Verteilereinrichtung BDE dargestellt, auf die noch eingegangen wird.

Wie die FIG 2 zeigt,sind an eine Teilnehmeranschlußbaugruppe SLMD acht Teilnehmeranschlußleitungen bzw. Teilnehmerendgeräte angeschlossen, bzw. acht Basisanschlüsse BA0 bis BA7 vorhanden.

Jeweils acht solcher Teilnehmeranschlußbaugruppen SLMD bilden wiederum eine Gruppe, deren vermittlungsseitige Aus- und Eingänge über die erwähnte Verteilereinrichtung BDE auf einen gemeinsamen Bus SB1 geschaltet werden, der zu der erwähnten Schnittstelleneinheit DIU führt. Mit gestrichelten Verbindungslinien zwischen der in der FIG dargestellten unteren Gruppe von acht Teilnehmeranschlußbaugruppen SLMD und der Verteilereinrichtung BDE ist angedeutet, daß im Ersatzschaltfall die dargestellte Verteilereinrichtung BDE die Verteilerfunktion für diese untere Gruppe mitübernehmen kann, was dann in Frage kommt, wenn die dieser unteren Gruppe von Teilnehmeranschlußbaugruppen SLMD zugeordnete, hier nicht dargestellte Verteilereinrichtung defekt ist bzw. die Verbindung zwischen der zweiten Schnittstelleneinheit DIU zu einer Anschlußgruppe LTG, über die die Verbindung von und zu der unteren Gruppe von Teilnehmeranschlußbaugruppen SLMD führt, unterbrochen ist.

Als Bestandteile der Teilnehmeranschlußbaugruppen SLMD sind in der FIG 2 Bausteine HYBR dargestellt, die Schnittstellenfunktionen zur Teilnehmeranschlußleitung hin erfüllen, Bausteine IEC, die eine Echokompensation bewirken, sowie ein Baustein EPIC, der für die Bearbeitung der B-Kanäle, also der Sprachkanäle, verantwortlich ist und dabei eine Zeitschlitzzuorcnung auf den Sprachbus SB0 zwischen der Teilnehmeranschlußbaugruppe und der Verteilereinheit BDE bewirkt. Schließlich ist ein Mikroprozessor µP1 dargestellt, der den Baustein EPIC im Zuge der erwähnten Zeitschlitzzuordnung steuert.

Einrichtungen zur D-Kanal-Behandlung, wie sie bisher Bestandteil der Teilnehmeranschlußbaugruppen SLMD waren, fehlen hier, die D-Kanal-Informationen werden vielmehr in unveränderter Form der Verteilereinrichtung BDE zugeführt, bzw. einer erfindungsgemäß dort angeordnete Einrichtung DCH zur D-Kanal-Behandlung der ganzen Gruppe bzw. der beiden Gruppen von Teilnehmeranschlußbaugruppen SLMD, die unter dem Steuereinfluß eines Mikroprozessors µP2 steht. Für die Übertragung der D-Kanal-Informationen zwischen den Teilnehmeranschlußbaugruppen und der Verteilereinrichtung BDE wird eine Leitung DL ausgenutzt, die bei der bisherigen Konzeption der Übertragung von Paketdaten gedient hatte, die im Zuge der D-Kanalbehandlung innerhalb der Teilnehmeranschlußbaugruppen von den Steuerinformationen des D-Kanals abgetrennt worden waren. Diese Leitung war dort Bestandteil eines Collision-Busses, mit dessen Hilfe die Zugriffssteuerung auf einen Summe-p-Kanal erfolgt, in dem die Paketdaten einer Vielzahl von ISDN-Teilnehmern weiterübertragen werden. Dieser Bus CB wird nach wie vor in der Schnittstelleneinheit DIU zurückgeschleift, beginnt nunmehr aber erst in der Verteilereinrichtung BDE, nämlich ausgangsseitig der dort jetzt vorgesehenen Einrichtung DCH zur D-Kanal-Behandlung. Die Einblendung der Paketdaten auf den Summe-p-Kanal erfolgt jetzt von hier aus über das ODER-Glied ODP auf den zwischen der Verteilereinrichtung BDE und der Schnittstelleneinheit verlaufenden Sprachbus SB1.

Für die digitale Teilnehmerleitungseinheit kommt eine bauliche Gliederung in eine Basiseinheit und in eine Erweiterungseinheit in Frage. Die Basiseinheit umfaßt in einem solchen Falle außer Teilnehmeranschlußbaugruppen zentral erforderliche Einheiten, wie die erwähnte Steuerung DLUC sowie einen Taktgenerator, wogegen die Erweiterungseinheit lediglich Teilnehmeranschlußbaugruppen sowie Verteilereinrichtungen BDE umfaßt. Unter Voraussetzung einer solchen Gliederung und der Voraussetzung, daß die digitale Teilnehmerleitungseinheit auch für den Anschluß von analogen Teilnehmerendgeräten ausgelegt ist, sind gemäß einer Ausgestaltung der Erfindung die Teilnehmeranschlußbaugruppen für den Anschluß der analogen Teilnehmerendgeräte in der Basiseinheit enthalten, wogegen die Erweiterungseinheit lediglich Teilnehmeranschlußbaugruppen für den Anschluß von ISDN-Teilnehmerendgeräten enthält. Die erforderlichen Verdrahtungsänderungen sind in diesem Falle besonderes gering.

## Patentansprüche

1. Digitale Teilnehmerleitungseinheit für den Anschluß von Teilnehmerendgeräten an eine digitale Fernsprechvermittlungsstelle mit einer Mehrzahl von Teilnehmeranschlußbaugruppen, die Gruppen von Teilnehmerendgeräten eines digitalen systemintegrierenden Nachrichtennetzes (ISDN-Teilnehmerendgeräten) zugeordnet sind, wobei Teilnehmeranschlußbaugruppen (SLMD) verwendet werden, die gegenüber Teilnehmeranschlußbaugruppen, in denen neben der Durchschaltung der einem ISDN-Teilnehmerendgerät jeweils zur Verfügung stehenden beiden Nutzkanäle (B-Kanäle) die Behandlung des einem solchen Teilnehmerendgerät darüber hinaus zur Verfügung stehenden Signalisierungskanals (D-Kanal) erfolgt, im Hinblick auf einen Wegfall der dezentralen D-Kanal-Behandlung und der Vornahme einer zentralen D-Kanal-Behandlung aufbau- und funktionsmäßig reduziert sind, **dadurch gekennzeichnet**, daß unter weitgehender Beibehaltung der Verdrahtungsanschlüsse einer Verteilereinrichtung (BDE), über die die vermittlungsseitigen Sprachsignalaus- und -eingänge der Teilnehmeranschlußbaugruppen auf einen gemeinsamen weiterführenden Sprachbus geschaltet werden, diese Verteilereinrichtung um Einheiten (DCH, µP2) zur gemeinsamen D-Kanal-Behandlung der Gesamtheit der D-Kanäle der an die Gruppe von Teilnehmeranschlußbaugruppen (SLMD) angeschlossenen ISDN-Teilnehmerendgeräte erweitert ist, wobei diese D-Kanäle über den durch Verzicht auf eine individuelle D-Kanal-Behandlung in den Teilnehmeranschlußbaugruppen (SLMD) freigewordene Busverbindung (DL) an die Verteilereinrichtung (BDE) gelangen.

2. Digitale Teilnehmerleitungseinheit nach Anspruch 1, die in eine Basiseinheit und in eine Erweiterungseinheit gegliedert ist, **dadurch gekennzeichnet,** daß nur die Erweiterungseinheit Teilnehmeranschlußbaugruppen für ISDN-Teilnehmerendgeräte enthält und dementsprechend nur die Teilnehmeranschlußbaugruppen und die Verteilereinrichtung dieser Erweiterungseinheit in der genannten Weise ausgebildet sind, wogegen die Basiseinheit nur Teilnehmeranschlußbaugruppen für den Anschluß analoger Teilnehmerendgeräte enthält.

## Claims

1. Digital subscriber line unit for connecting subscriber terminals to a digital telephone exchange having a plurality of subscriber line modules which are assigned to groups of subscriber terminals of a digital system-integrating telecommunications network (ISDN subscriber terminals), subscriber line modules (SLMD) being used which, in comparison with subscriber line modules in which, in addition to the connecting through of the two traffic channels (B channels) which are available to an ISDN subscriber terminal, a signalling channel (D channel) which is also available to such a subscriber terminal is handled, are reduced structurally and functionally in terms of the elimination of the decentralized D channel handling and the performance of a central D channel handling, characterized in that, while largely retaining the wiring connections of a distributor device (BDE) via which the exchange-side voice signal outputs and inputs of the subscriber line modules are connected to a common, continuing voice bus, this distributor device is expanded by units (DCH, µP2) for the common D channel handling of the entirety of the D channels of the ISDN subscriber terminals which are connected to the group of subscriber line modules (SLMD), these D channels being fed to the distributor device (BDE) via the bus link (DL) which has become free as a result of an individual D channel handling in the subscriber line modules (SLMD) being dispensed with.

2. Digital subscriber line unit according to Claim 1 which is divided up into a base unit and an expansion unit, characterized in that only the expansion unit contains subscriber line modules for ISDN subscriber terminals, and correspondingly only the subscriber line modules and the distributor device of this expansion unit are designed in the aforesaid manner, whereas the base unit contains only subscriber line modules for the connection of analog subscriber terminals.

## Revendications

1. Unité de raccordement de lignes d'abonné numérique pour le raccordement de terminaux d'abonné à un central téléphonique numérique comportant une pluralité de modules de raccordement d'abonné, qui sont associés à des groupes de terminaux d'abonné d'un réseau de communication à systèmes intégrés numérique (terminaux d'abonné RNIS), dans lequel il est utilisé des modules (SLMD) de raccordement de lignes d'abonné, qui par rapport à des modules de raccordement d'abonné dans lesquels est effectué, outre la commutation de deux canaux d'utilisateurs (canaux B) mis à disposition respectivement d'un terminal d'abonné RNIS, le traitement du canal de signalisation (canal D) se trouvant en plus à disposition d'un terminal d'abonné de ce genre, sont réduits d'un point de vue fonctionnel et structurel en se dispensant du traitement décentralisé de canal D et du traitement central de canal D, caractérisée en ce que, tout en maintenant dans une grande mesure les accés d'interconnexion d'un dispositif (BDE) répartiteur par l'intermédiaire duquel les entrées et sorties de signaux vocaux des modules de raccordement de lignes d'abonné du côté du central sont commutées sur un bus vocal les conduisant plus loin en commun, ce dispositif répartiteur est agrandi d'unités (DCH, µP2) pour le traitement commun de canal D de la totalité des canaux D des terminaux d'abonné RNIS reliés au groupe de modules (SLMD) de raccordement de lignes d'abonné, ces canaux D allant au dispositif (BDE) répartiteur par l'intermédiaire de la liaison (DL) de bus devenue libre par le fait que l'on a renoncé à un traitement de canal D individuel dans les modules (SLMD) de raccordement de lignes d'abonné.

2. Unité de raccordement de lignes d'abonné numérique suivant la revendication 1, qui est divisée en une unité de base et en une unité de prolongement, caractérisée en ce que seule l'unité de prolongement contient des modules de raccordement de lignes d'abonné pour des terminaux d'abonné RNIS, et de manière correspondante, seuls les modules de raccordement d'abonné et le dispositif répartiteur de cette unité de prolongement sont formés de la manière indiquée, tandis que l'unité de base ne contient que des modules de raccordement de lignes d'abonné pour les raccordements de terminaux d'abonné analogiques.
